# EUROPEAN PATENT APPLICATION

(11) **EP 4 397 777 A1**
(43) Date of publication of application: **10.07.2024**
(21) Application number: 22864083.5
(22) Date of filing: 19.07.2022
(51) Int. Cl.: C22B 5/02, C22B 1/02, C22B 5/10, C22B 7/00, C22B 23/02, C22B 26/12

(54) **METHOD FOR PRODUCING VALUABLE METAL**

(30) Priority: 01.09.2021 JP 2021142281
(71) Applicant: SUMITOMO METAL MINING CO., LTD., Tokyo 105-8716 (JP)
(72) Inventor: YAMASHITA, Yu, Niihama-shi, Ehime 792-0002 (JP); HAGIO, Tomoya, Niihama-shi, Ehime 792-0002 (JP)
(74) Representative: Jones, Nicholas Andrew
(86) International application number: PCT/JP2022/028093
(87) International publication number: WO 2023/032495

(57) **Abstract**

To provide a method capable of inexpensively producing a valuable metal.

A method according to the present invention includes at least a preparation step of preparing a raw material containing Li, Mn, Al, and valuable metals; a reductive melting step of subjecting the raw material to a reductive melting treatment to obtain a reduced product containing an alloy containing valuable metals and a slag; and a slag separation step of separating the slag from the reduced product to recover the alloy, wherein in any one or both of the preparation step and the reductive melting step, a flux containing calcium (Ca) is added, a molar ratio (Li/Al ratio) of Li to Al in the slag obtained by the reductive melting treatment is 0.25 or more, a molar ratio (Ca/Al ratio) of Ca to Al in the slag is 0.30 or more, and a Mn amount in the slag is 5.0 mass% or more, and in the reductive melting treatment, an oxygen partial pressure in a melt obtained by melting the raw material is controlled to 10⁻¹⁴ or more and 10⁻¹¹ or less.

## Description

### Technical Field

The present invention relates to a method for producing a valuable metal.

### Background Art

In recent years, lithium ion batteries have been widely used as light-weight and high-output batteries. A well-known lithium ion battery has a structure in which a negative electrode material, a positive electrode material, a separator, and an electrolytic solution are sealed in an exterior can. Here, the exterior can is made of a metal such as iron (Fe) or aluminum (Al). The negative electrode material is made of a negative electrode active material (graphite and the like) fixed to a negative electrode current collector (copper foil and the like). The positive electrode material is made of a positive electrode active material (lithium nickelate, lithium cobaltate, and the like) fixed to a positive electrode current collector (aluminum foil and the like). The separator is made of a polypropylene porous resin film and the like. The electrolytic solution contains an electrolyte such as lithium hexafluorophosphate (LiPF₆).

One of the main applications of the lithium ion battery is a hybrid vehicle and an electric vehicle. Therefore, a large amount of lithium ion batteries mounted on the automobile are expected to be discarded in the future according to the life cycle of the automobile. In addition, there are lithium ion batteries that are discarded as defective products during the production. Such used batteries and defective batteries generated during the production (hereinafter, also referred to as "waste lithium ion battery") are required to be reused as resources.

As a reuse method, a pyrometallurgical process involving entirely melting the waste lithium ion batteries in a high-temperature furnace has been proposed. The pyrometallurgical process includes melting crushed waste lithium ion batteries, and separating and recovering valuable metals typified by cobalt (Co), nickel (Ni), and copper (Cu), which are a recovery target, from low value-added metals typified by iron (Fe) and aluminum (Al) by utilizing a difference in oxygen affinity therebetween. In this method, the low value-added metals are oxidized as much as possible to form a slag, and the valuable metals are recovered as an alloy by suppressing its oxidation as much as possible.

For example, Patent Literature 1 discloses a process for recovering enthalpy and metals from lithium ion batteries in a copper smelting furnace, the process including a step of supplying a useful feedstock and a slag forming agent to the smelting furnace, and a step of adding a heat generating agent and a reducing agent, wherein at least a part of the heat generating agent and/or the reducing agent is replaced with a lithium ion battery containing one or more of metallic iron, metallic aluminum, and carbon (claim 1 of Patent Literature 1). If a copper smelting furnace can be used, valuable metals such as copper and nickel can be efficiently recovered from the lithium ion battery according to copper smelting. Cobalt is distributed to the slag in copper smelting. In order to recover cobalt, for example, a method including roasting a waste lithium ion battery to separate an alloy and a slag, and subjecting the obtained alloy to a hydrometallurgical treatment is conceivable.

In addition, Patent Literature 2 discloses a method for recovering valuable metals containing nickel and cobalt from a waste lithium ion battery containing nickel and cobalt, the method including a melting step of melting a waste battery to obtain a molten material, an oxidation step of oxidizing the molten material at the melting step or the waste battery before the melting step, a slag separation step of separating a slag from the molten material to recover an alloy containing valuable metals, and a dephosphorization step of separating phosphorus contained in the alloy, wherein in the dephosphorization step, a lime-containing material is added to the alloy, and then the alloy is oxidized (claim 1 of Patent Literature 2). The technique of Patent Literature 2 proposes a method for recovering valuable metals by adding silicon dioxide (SiO₂) and calcium oxide (CaO) to lower the melting point of the slag at the time of melting the waste lithium ion battery ([0037] and [0038] of Patent Literature 2).

### Citation List

### Patent Literature

Patent Literature 1: WO 2015/096945 A
Patent Literature 2: JP 5853585 A

### Summary of Invention

### Technical Problem

However, the methods proposed in Patent Literatures 1 and 2 still have problems. For example, in the method disclosed in Patent Literature 1, a high temperature treatment is required. In addition, there is a problem that the oxide of the treatment container is eroded by the slag and is immediately cracked. When such erosion occurs, equipment cost becomes enormous and valuable metals cannot be recovered at low cost. In addition, in the method disclosed in Patent Literature 2, the amount of flux to be added is large, and thus the processing amount of the waste lithium ion battery is reduced. Furthermore, since the flux contains a large amount of silicon dioxide (SiO₂), which is an acidic oxide, phosphorus, which is an acidic oxide, may be insufficiently removed from the metal. Due to these problems, development of a technique for recovering valuable metals at low cost from waste lithium ion batteries has been desired.

Therefore, the present inventors have conducted intensive studies in view of such circumstances. As a result, focusing on the molar ratio (Li/Al ratio) of lithium (Li) to aluminum (Al), the molar ratio (Ca/Al ratio) of calcium (Ca) to aluminum (Al), and the amount of manganese (Mn) in the slag, the present inventors have obtained findings that, by limiting these ratios and the amount within predetermined ranges, the melting temperature of the slag can be lowered to 1,550°C or lower, and valuable metals can be recovered at low cost.

The present invention has been completed based on such findings, and an object thereof is to provide a method capable of producing a valuable metal at low cost.

### Solution to Problem

The present invention includes the following aspects (1) to (7). In the present specification, the expression "to" includes numerical values at both ends thereof. That is, "X to Y" has the same meaning as "X or more and Y or less".

(1) A first aspect of the present invention is a method for producing a valuable metal, including: a preparation step of preparing a raw material containing at least lithium (Li), manganese (Mn), aluminum (Al), and valuable metals; a reductive melting step of subjecting the raw material to a reductive melting treatment to obtain a reduced product containing an alloy containing valuable metals and a slag; and a slag separation step of separating the slag from the reduced product to recover the alloy, wherein in any one or both of the preparation step and the reductive melting step, a flux containing calcium (Ca) is added to the raw material and/or a treated product, a molar ratio (Li/Al ratio) of lithium (Li) to aluminum (Al) in the slag obtained by the reductive melting treatment is 0.25 or more, a molar ratio (Ca/Al ratio) of calcium (Ca) to aluminum (Al) in the slag is 0.30 or more, and an amount of manganese (Mn) in the slag is 5.0 mass% or more, and in the reductive melting treatment, an oxygen partial pressure in a melt obtained by melting the raw material is controlled to 10⁻¹⁴ or more and 10⁻¹¹ or less.
(2) A second aspect of the present invention is the method for producing a valuable metal according to the first invention, wherein in the reductive melting treatment, an oxygen partial pressure in a melt obtained by melting the raw material is controlled to 10⁻¹⁴ or more and 10⁻¹³ or less.
(3) A third aspect of the present invention is the method for producing a valuable metal according to the first or second aspect, further including an oxidative roasting step of oxidatively roasting the raw material to obtain an oxidatively roasted product, wherein the oxidatively roasted product is subjected to the reductive melting treatment.
(4) A fourth aspect of the present invention is the method for producing a valuable metal according to any one of the first to third aspects, wherein a reducing agent is introduced in the reductive melting treatment.
(5) A fifth aspect of the present invention is the method for producing a valuable metal according to any one of the first to fourth aspects, wherein a heating temperature in the reductive melting treatment is 1,300°C or higher and 1,550°C or lower.
(6) A sixth aspect of the present invention is the method for producing a valuable metal according to any one of the first to fifth aspects, wherein a heating temperature in the reductive melting treatment is 1,350°C or higher and 1,450°C or lower.
(7) A seventh aspect of the present invention is the method for producing a valuable metal according to any one of the first to sixth aspects, wherein the raw material includes a waste lithium ion battery.

### Advantageous Effects of Invention

According to the present invention, there is provided a method capable of producing a valuable metal at low cost.

### Brief Description of Drawings

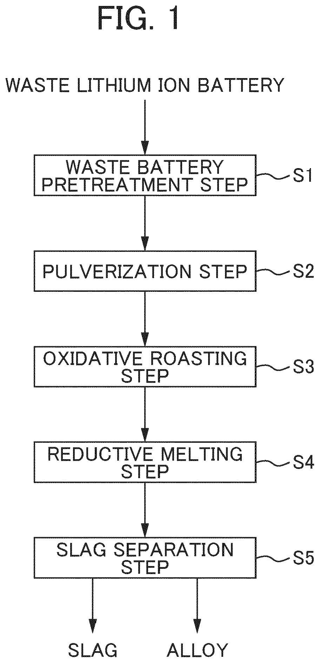

Fig. 1 is a process chart showing an example of a flow of a method for producing a valuable metal.

### Description of Embodiments

Specific embodiments (hereinafter, referred to as "present embodiments") of the present invention will be described. Note that the present invention is not limited to the following embodiments, and various modifications can be made without changing the gist of the present invention.

### <<1. Method for producing valuable metal>>

The method for producing a valuable metal according to the present embodiment is a method for separating and recovering valuable metals from a raw material containing at least lithium (Li), manganese (Mn), aluminum (Al), and valuable metals. Therefore, this method can also be referred to as a method for recovering valuable metals. The method according to the present embodiment is mainly a method according to a pyrometallurgical process, but may be composed of a pyrometallurgical process and a hydrometallurgical process.

Specifically, the method according to the present embodiment includes the following steps: a preparation step of preparing a raw material containing at least lithium (Li), manganese (Mn), aluminum (Al), and valuable metals; a reductive melting step of subjecting the raw material to a reductive melting treatment to obtain a reduced product containing an alloy containing valuable metals and a slag; and a slag separation step of separating the slag from the reduced product to recover the alloy.

In any one or both of the preparation step and the reductive melting step, a flux containing calcium (Ca) is added to the raw material and/or the treated product thereof.

Then, the treatment is performed so that the molar ratio (Li/Al ratio) of lithium (Li) to aluminum (Al) in the slag obtained by the reductive melting treatment is 0.25 or more, the molar ratio (Ca/Al ratio) of calcium (Ca) to aluminum (Al) in the slag is 0.30 or more, and the amount of manganese (Mn) in the slag is 5.0 mass% or more.

Furthermore, in the reductive melting treatment, the oxygen partial pressure in the melt obtained by melting the raw material is controlled to 10⁻¹⁴ or more and 10⁻¹¹ or less.

According to such a method of the present embodiment, the melting temperature of the slag can be lowered, and the viscosity of the slag is reduced. Therefore, it is possible to efficiently separate the slag and the alloy obtained by reductively melting the raw material, and as a result, it is possible to efficiently produce a valuable metal at low cost.

Here, the valuable metal is a production target, and is, for example, at least one metal or alloy selected from the group consisting of copper (Cu), nickel (Ni), cobalt (Co), and a combination thereof.

### [Preparation step]

In the preparation step, a raw material is prepared. The raw material is a treatment target for producing a valuable metal, contains at least lithium (Li), manganese (Mn), and aluminum (Al), and further contains valuable metals. As described above, the valuable metal contains, for example, at least one selected from the group consisting of copper (Cu), nickel (Ni), cobalt (Co), and a combination thereof. The raw material may contain these components in the form of a metal or in the form of a compound such as an oxide. In addition, the raw material may contain an inorganic component or an organic component other than these components.

The raw material is not particularly limited, and examples thereof include waste lithium ion batteries, dielectric materials (capacitors), and magnetic materials. In addition, the form of such a material is not limited as long as it is suitable for the treatment in the subsequent reductive melting step. In the preparation step, the raw material may be subjected to a pulverization treatment or the like to form a suitable form. Furthermore, in the preparation step, the raw material may be subjected to heat treatment, fractionation treatment, or the like to remove unnecessary components such as moisture and organic substances.

In the preparation step, a flux containing calcium (Ca) can be added to the raw material. Examples of the flux include calcium oxide (CaO) and calcium carbonate (CaCO₃). In the method according to the present embodiment, a flux is added in any one or both of the preparation step and the reductive melting step.

### [Reductive melting step]

In the reductive melting step, the prepared raw material is charged into a melting furnace and subjected to a reductive melting treatment. Specifically, in the reductive melting treatment, the raw material is heated to obtain a melt, and then a reduction treatment is performed on the melt using a reducing agent or the like, to thereby obtain a reduced product. The resulting reduced product contains an alloy and a slag separately. The alloy contains valuable metals. From this, it is possible to separate the component (alloy) containing valuable metals and other components in the reduced product.

More specifically, the reductive melting treatment is a treatment involving reductively melting a raw material by heating in a melting furnace to obtain a reduced product. The purpose of this treatment is to convert low value-added metals (Al and the like) contained in the raw material into an oxide, and at the same time, to recover valuable metals (Cu, Ni, Co) as an alloy integrated through reduction and melting. After the reductive melting treatment, an alloy in a molten state is obtained. In the case of performing an oxidative roasting treatment described later prior to the reductive melting treatment, the obtained oxidatively roasted product is charged into a melting furnace and reductively melted by heating. As a result, low value-added metals (Al and the like) oxidized by the oxidative roasting treatment are maintained as an oxide, and at the same time, valuable metals (Cu, Ni, Co) are reduced and melted to be recovered as an integrated alloy.

This is because low value-added metals (Al or the like) have a high oxygen affinity, whereas valuable metals have a low oxygen affinity. For example, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. That is, aluminum (Al) is most easily oxidized, and copper (Cu) is most hardly oxidized. Therefore, low value-added metals (Al and the like) are easily oxidized to become a slag, and valuable metals (for example, Cu, Ni, Co) are reduced to become a metal (alloy). In this way, low value-added metals and valuable metals can be separated into a slag and an alloy.

In the reductive melting treatment, it is preferable to introduce a reducing agent. As the reducing agent, carbon and/or carbon monoxide is preferably used. Carbon has an ability to easily reduce valuable metals (for example, Cu, Ni, Co) as a recovery target. For example, 2 moles of valuable metal oxide (copper oxide, nickel oxide, and the like) can be reduced with 1 mole of carbon. In addition, the reduction technique using carbon or carbon monoxide has extremely higher safety than the technique using a metal reducing agent (for example, a thermite reaction process using aluminum). As the carbon, artificial graphite and/or natural graphite can be used, and coal or coke can be used as long as there is no risk of contamination with impurities.

The heating temperature in the reductive melting treatment is not particularly limited, but is preferably 1,300°C or higher and 1,550°C or lower, and more preferably 1,350°C or higher and 1,450°C or lower. When the heating temperature exceeds 1,550°C, thermal energy is wastefully consumed, and consumption of refractory materials such as crucibles becomes severe, and productivity may be deteriorated. On the other hand, when the heating temperature is lower than 1,300°C, there is a possibility that the separation between the slag and the alloy deteriorates, and the recovery ratio of the valuable metal decreases.

The reductive melting treatment may be performed by a known method. Examples thereof include a method of charging a raw material for melting into a crucible made of alumina (Al₂O₃), and heating the raw material by resistance heating or the like. In addition, in the reductive melting treatment, harmful substances such as dust and exhaust gas may be generated, but the harmful substances can be detoxified by performing a treatment such as a known exhaust gas treatment.

Here, in the reductive melting treatment, a flux containing calcium (Ca) can be added to the raw material. In the method according to the present embodiment, a flux is added in any one or both of the preparation step and the reductive melting step. The flux contains calcium (Ca) as a main component, and examples thereof include calcium oxide (CaO) and calcium carbonate (CaCO₃). However, when the raw material as a treatment target contains the calcium component in a required amount, the flux may not be added. The flux preferably does not contain silicon (Si).

In the method according to the present embodiment, the treatment is performed so that the molar ratio (Li/Al ratio) of lithium (Li) to aluminum (Al) is 0.25 or more, and the molar ratio (Ca/Al ratio) of calcium (Ca) to aluminum (Al) is 0.30 or more in the slag obtained by the reductive melting treatment.

Lithium (Li) and calcium (Ca) contribute to lowering the melting temperature of the slag. When the amount of calcium (Ca) in the slag is large, phosphorus contained in the raw material is easily removed. This is because when phosphorus is oxidized, it becomes an acidic oxide, whereas when calcium (Ca) is oxidized, it becomes a basic oxide. Therefore, the higher the amount of calcium (Ca) in the slag, the more basic the slag composition becomes, as a result of which phosphorus is easier to be contained in the slag and removed.

The upper limits of the Li/Al ratio and the Ca/Al ratio are not particularly limited in view of the melting temperature of the slag. This is because the slag can be melted even without containing aluminum (Al). For example, even lithium oxide (Li₂O) alone can be melted at a temperature of about 1,430°C.

However, when the Li/Al ratio is excessively high, lithium (Li) may form a compound with an oxide contained in the crucible, so that the lifetime of the crucible may be significantly reduced depending on the material of the crucible to be used. When both the Li/Al ratio and the Ca/Al ratio are excessively high, there is a possibility that the slag becomes difficult to melt conversely. For these reasons, the Li/Al ratio in the slag is more preferably 0.25 or more and 10.00 or less, and still more preferably 0.25 or more and 2.50 or less. The Ca/Al ratio in the slag is more preferably 0.30 or more and 3.00 or less, and still more preferably 0.30 or more and 1.00 or less.

The amount of the slag components (Al, Li, Ca) can be easily controlled by adjusting the composition of the raw material and the amount of the flux to be added.

In addition, in the method according to the present embodiment, the treatment is performed so that the amount of manganese (Mn) in the slag (hereinafter, also referred to as "Mn grade") is 5.0 mass% or more. Manganese (Mn) contributes to lowering the melting temperature of the slag.

The upper limit of the amount of manganese (Mn) in the slag is not particularly limited. However, when the amount of manganese (Mn) is excessively large, there is a possibility that the slag becomes difficult to melt conversely. Therefore, the amount of manganese (Mn) in the slag is preferably 5.0 mass% or more and 10.0 mass% or less, and more preferably 5.0 mass% or more and 7.5 mass% or less.

The amount of manganese (Mn) in the slag can be easily controlled by adjusting the composition of the raw material. For example, the amount of manganese (Mn) can be controlled by adding a positive electrode material containing manganese (Mn) of a lithium ion battery to the raw material.

In the method according to the present embodiment, the degree of reduction is controlled such that the oxygen partial pressure in the melt obtained by melting the raw material is 10⁻¹⁴ or more and 10⁻¹¹ or less at the time of the reductive melting treatment. As described above, the amount of manganese in the slag can be controlled by controlling the oxygen partial pressure in the melt within a specific range. That is, the oxygen partial pressure is used as an index of the degree of reduction for controlling the amount of manganese in the resulting slag.

When the degree of reduction is too high, that is, when the oxygen partial pressure in the melt is lowered to be less than 10⁻¹⁴, manganese (Mn) is distributed to the metal, the manganese (Mn) grade in the slag is lowered, and the slag is hardly melted. On the other hand, when the degree of reduction is too low, that is, when the oxygen partial pressure in the melt is increased to be more than 10⁻¹¹, the recovery ratio of the valuable metal is decreased. Thus, it is important to control the degree of reduction to an appropriate degree.

More preferably, the oxygen partial pressure in the melt is controlled to be 10⁻¹⁴ or more and 10⁻¹³ or less. Preferably, by controlling the degree of reduction to such a range, the recovery ratio of the valuable metal can be further increased while melting the slag well.

In the control of the degree of reduction, a reducing agent may be added when the degree of reduction is increased, and an oxidizing agent may be added when the degree of reduction is decreased. As for the type of the reducing agent or oxidizing agent to be used, the method of addition, and the like, known methods can be employed.

When the oxidative roasting treatment (oxidative roasting step) described later is performed prior to the reductive melting treatment, it is not necessary to perform the oxidation treatment in the reductive melting treatment. However, when the oxidation in the oxidative roasting treatment is insufficient or when it is intended to further adjust the degree of reduction, an additional oxidation treatment may be performed in the reductive melting treatment or after the reductive melting treatment. By performing the additional oxidation treatment, the degree of reduction can be more strictly adjusted. Examples of the method of additionally performing the oxidation treatment include a method of blowing an oxidizing agent into the molten material produced by the reductive melting treatment. Specifically, the oxidation treatment is performed by inserting a metal tube (lance) into the molten material produced by the reductive melting treatment, and blowing an oxidizing agent by bubbling. In this case, a gas containing oxygen such as air, pure oxygen, or an oxygen-enriched gas can be used as the oxidizing agent.

### [Oxidative roasting step]

In the method according to the present embodiment, a step (oxidative roasting step) of oxidatively roasting the raw material to obtain an oxidatively roasted product can be further provided prior to the reductive melting treatment as necessary.

In the oxidative roasting treatment, a raw material is oxidatively roasted (oxidation treatment) to obtain an oxidatively roasted product, and even when the raw material contains carbon, the carbon is oxidized and removed, and as a result, the alloy integration of valuable metals in the subsequent reductive melting step can be promoted. Specifically, in the reductive melting treatment, valuable metals are reduced to locally become molten fine particles, but at this time, carbon contained in the charge physically hinders aggregation of the molten fine particles (valuable metals), and hinders aggregation and integration of the molten fine particles as well as separation between the metal (alloy) and slag due to the aggregation, and may decrease the recovery ratio of the valuable metal. In consideration of this point, by subjecting the raw material to the oxidative roasting treatment by providing the oxidative roasting step prior to the reductive melting treatment, carbon in the raw material can be effectively removed, whereby aggregation and integration of the molten fine particles (valuable metals) produced by the reductive melting treatment proceeds, and the recovery ratio of the valuable metal can be further increased.

In addition, by providing the oxidative roasting step, it is possible to suppress variations in oxidation. In the oxidative roasting treatment, it is desirable to perform the treatment (oxidative roasting) at a degree of oxidation at which low value-added metals (Al and the like) contained in the raw material can be oxidized. Meanwhile, the degree of oxidation is easily controlled by adjusting the temperature, time, and/or atmosphere of the oxidative roasting treatment. Therefore, the degree of oxidation can be more strictly adjusted by the oxidative roasting treatment, so that variations in oxidation can be suppressed.

The degree of oxidation is adjusted as follows. As described above, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. In the oxidative roasting treatment, oxidation is allowed to proceed until the entire amount of aluminum (Al) is oxidized. The oxidation may be promoted until a part of iron (Fe) is oxidized, but the degree of oxidation is maintained to such an extent that cobalt (Co) is not recovered in the form of a slag through oxidation.

When the degree of oxidation is adjusted by the oxidative roasting treatment, it is preferable to introduce an appropriate amount of the oxidizing agent. In particular, when a waste lithium ion battery is contained as a raw material, introduction of the oxidizing agent is preferable. The lithium ion battery contains a metal such as aluminum or iron as an exterior material. The lithium ion battery also contains an aluminum foil and a carbon material as a positive electrode material and a negative electrode material. Furthermore, in the case of a battery assembly, plastic is used as an external package. These are all materials that act as reducing agents. By introducing the oxidizing agent in the oxidative roasting treatment, the degree of oxidation can be adjusted within an appropriate range.

The oxidizing agent is not particularly limited as long as it can oxidize carbon or low value-added metals (Al and the like), but a gas containing oxygen, such as air, pure oxygen, or an oxygen-enriched gas, which is easy to handle, is preferable. The introduction amount of the oxidizing agent is approximately 1.2 times (for example, 1.15 to 1.25 times) the amount (chemical equivalent) required for oxidation of each substance to be oxidized.

The heating temperature in the oxidative roasting (oxidation treatment) is preferably 700°C or higher and 1,100°C or lower, and more preferably 800°C or higher and 1,000°C or lower. By setting the heating temperature to 700°C or higher, the oxidation efficiency of carbon can be further enhanced, so that the oxidation time can be shortened. In addition, by setting the heating temperature to 1,100°C or lower, the thermal energy cost can be suppressed, so that the efficiency of oxidative roasting can be enhanced.

The oxidative roasting treatment can be performed using a known roasting furnace. In addition, it is preferable to use a furnace (preliminary furnace) different from the melting furnace used in the treatment (reductive melting treatment) in the subsequent reductive melting step, and perform the treatment in the preliminary furnace. As the roasting furnace, any type of furnace can be used as long as it is a furnace capable of supplying an oxidizing agent (oxygen or the like) while roasting the raw material and performing an oxidation treatment therein. Examples of the roasting furnace include conventionally known rotary kilns and tunnel kilns (hearth furnace).

### [Slag separation step]

In the slag separation step, the slag is separated from the reduced product obtained in the reductive melting step to recover the alloy. The slag and the alloy have different specific gravities. Therefore, the slag having a smaller specific gravity than that of the alloy gathers on the upper part of the alloy, and thus the slag can be easily separated and recovered by specific gravity separation.

A sulfurization step of sulfurizing the obtained alloy and a pulverization step of pulverizing a mixture of the obtained sulfide and alloy may be provided after the slag separation step. Furthermore, the valuable metal alloy obtained through such a pyrometallurgical process may be subjected to a hydrometallurgical process. Impurity components are removed and valuable metals (for example, Cu, Ni, Co) are separated and purified through the hydrometallurgical process, whereby respective valuable metals can be recovered. Examples of the treatment in the hydrometallurgical process include known methods such as a neutralization treatment and a solvent extraction treatment.

According to the method according to the present embodiment as described above, the melting temperature of the slag can be lowered, specifically, for example, 1,550°C or lower, preferably 1,450°C or lower, and the viscosity of the slag is reduced. Therefore, the slag and the alloy obtained by reductive melting can be efficiently separated, and as a result, valuable metals can be efficiently and inexpensively recovered.

### <<2. Recovery from waste lithium ion battery>>

As described above, the raw material used in the method according to the present embodiment is not particularly limited as long as it contains lithium (Li), manganese (Mn), aluminum (Al), and valuable metals. Among them, the raw material preferably includes a waste lithium ion battery.

The waste lithium ion battery contains lithium (Li), manganese (Mn), aluminum (Al), and valuable metals (Cu, Ni, Co), and also contains low value-added metals (Fe and the like) and a carbon component. Therefore, valuable metals can be efficiently separated and recovered by using the waste lithium ion battery as a raw material. The "waste lithium ion battery" is a concept including not only used lithium ion batteries but also defective products generated in the production process of the positive electrode material or the like constituting the battery, residues in the production process, and waste materials in the production process of the lithium ion battery, such as generated scraps. Therefore, the waste lithium ion battery can also be referred to as a lithium ion battery waste material.

Fig. 1 is a process chart showing an example of a flow of a method for recovering valuable metals from a waste lithium ion battery. As illustrated in Fig. 1, this method includes a waste battery pretreatment step S1 of removing an electrolytic solution and an exterior can of a waste lithium ion battery, a pulverization step S2 of pulverizing the waste battery into a pulverized product, an oxidative roasting step S3 of oxidatively roasting the pulverized product, a reductive melting step S4 of reductively melting the oxidatively roasted product, and a slag separation step S5 of separating a slag from the reduced product obtained by the reductive melting treatment to recover an alloy.

Although not illustrated, a sulfurization step of sulfurizing the obtained alloy and a pulverization step of pulverizing a mixture of the obtained sulfide and alloy may be provided.

### (Waste battery pretreatment step)

The waste battery pretreatment step S1 is performed for the purpose of preventing explosion and detoxifying the waste lithium ion battery. Since the lithium ion battery is a sealed system, an electrolytic solution or the like is contained therein. Therefore, if the pulverization treatment is performed on the lithium ion battery as it is, it is dangerous due to the risk of explosion. It is preferable to perform discharge treatment or electrolytic solution removal treatment by any method. In addition, the exterior can is often made of metal such as aluminum (Al) or iron (Fe), and it is relatively easy to recover such a metal exterior can as it is. As described above, by removing the electrolytic solution in the waste battery pretreatment step S1, the safety can be enhanced, and at the same time, the recovery ratio of the valuable metal (Cu, Ni, Co) can be enhanced.

A specific method of the waste battery pretreatment is not particularly limited. For example, a method of physically opening the waste battery with a needle-shaped blade edge to remove the electrolytic solution can be exemplified. In addition, a method of heating the waste battery and combusting the electrolytic solution to detoxify the waste battery is exemplified.

### (Pulverization step)

In the pulverization step S2, the contents of the waste lithium ion battery are pulverized to obtain a pulverized product. The pulverization treatment in the pulverization step S2 is intended to enhance the reaction efficiency in the pyrometallurgical process. By increasing the reaction efficiency, the recovery ratio of the valuable metal (Cu, Ni, Co) can be increased.

A specific pulverization method is not particularly limited. Pulverization can be performed using a conventionally known pulverizer such as a cutter mixer.

In the case of recovering aluminum (Al) and iron (Fe) contained in the exterior can, after pulverizing the waste lithium ion battery, the pulverized product is allowed to pass through an aluminum sorter using eddy current and a magnetic sorter for sorting iron, and then the pulverized product may be sieved using a sieving shaker. Aluminum (Al) easily becomes powdery by slight pulverization, and thus can be efficiently recovered. In addition, iron (Fe) contained in the exterior can may be recovered by magnetic sorting.

The waste battery pretreatment step S1 and the pulverization step S2 together correspond to the "preparation step" described above.

### (Oxidative roasting step)

In the oxidative roasting step S3, the pulverized product obtained in the pulverization step S2 is oxidatively roasted to obtain an oxidatively roasted product. This step is a step corresponding to the "oxidative roasting step" described above, and the details thereof are as described above.

### (Reductive melting step)

In the reductive melting step S4, the oxidatively roasted product obtained in the oxidative roasting step S3 is subjected to a reductive melting treatment to obtain a reduced product. This step is a step corresponding to the "reductive melting step" described above, and the details thereof are as described above.

In particular, in the method according to the present embodiment, the treatment is performed so that the molar ratio (Li/Al ratio) of lithium (Li) to aluminum (Al) in the slag obtained by the reductive melting treatment is 0.25 or more, the molar ratio (Ca/Al ratio) of calcium (Ca) to aluminum (Al) in the slag is 0.30 or more, and the amount of manganese (Mn) in the slag is 5.0 mass% or more. In addition, in the reductive melting treatment, the oxygen partial pressure in the melt obtained by melting the raw material is controlled to 10⁻¹⁴ or more and 10⁻¹¹ or less. According to such a method, the melting temperature of the slag to be obtained can be effectively lowered, and the viscosity of the slag is reduced. Therefore, the slag and the alloy obtained by reductive melting can be efficiently separated, and as a result, valuable metals can be efficiently and inexpensively recovered.

In any one or both of the preparation step and the reductive melting step, a flux containing calcium (Ca) is added to the raw material and/or the treated product.

### (Slag separation step)

In the slag separation step S5, the slag is separated from the reduced product obtained in the reductive melting step S4 to recover the alloy. This step corresponds to the "slag separation step" described above, and the details thereof are as described above.

Incidentally, a sulfurization step or a pulverization step may be provided after the slag separation step. Furthermore, the obtained valuable metal alloy may be subjected to a hydrometallurgical process. The details of the sulfurization step, the pulverization step, and the hydrometallurgical process are as described above.

### Examples

Hereinafter, the present invention will be described more specifically with reference to Examples, but the present invention is not limited to the following Examples at all.

### [Example 1]

### (1) Production of valuable metals

Using the waste lithium ion battery as a raw material, valuable metals were produced according to the following steps.

### (Waste battery pretreatment step and pulverization step (preparation step))

As the waste lithium ion battery, 18650 type cylindrical batteries, used in-vehicle rectangular batteries, and defective products collected in the battery production process were prepared. These waste batteries were immersed in salt water to be discharged, then moisture was removed, and roasting was performed at 260°C in the air to decompose and remove the electrolytic solution and the exterior can, thereby obtaining battery contents.

The obtained battery contents were pulverized using a pulverizer (Good Cutter, manufactured by Ujiie Manufacturing Co., Ltd.) to obtain a charge.

### (Oxidative roasting step)

The obtained pulverized product (charge) was oxidatively roasted to obtain an oxidatively roasted product. Oxidative roasting was performed using a rotary kiln at 900°C for 180 minutes in the air.

### (Reductive melting step)

To the obtained oxidatively roasted product, graphite as a reducing agent was added in an amount of moles 0.6 times the total number of moles of valuable metals (Cu, Ni, Co), that is, 1.2 times the number of moles necessary for the reduction of valuable metals, and calcium oxide (CaO) was further added and mixed as a flux so that the Ca/Al ratio was 0.33, and the obtained mixture was charged into a crucible made of alumina (Al₂O₃). Thereafter, the mixture charged in the crucible was subjected to a reductive melting treatment by heating, thereby obtaining a reduced product containing an alloy and a slag. The reductive melting treatment was performed at 1,450°C for 60 minutes by resistance heating. In addition, in the reductive melting treatment, the oxygen partial pressure in the melt was measured using an oxygen analyzer equipped with an oxygen probe (OXT-O, manufactured by Kawaso Electric Industrial Co., Ltd.) at the tip thereof. The oxygen partial pressure was adjusted by adding graphite or blowing air using a lance.

### (Slag separation step)

The slag was separated from the obtained reduced product to recover the alloy.

### (2) Evaluation

### (Component analysis of slag)

Component analysis of the slag separated from the reduced product was performed as follows. That is, the obtained slag was pulverized after cooling, and analyzed by fluorescent X-ray.

### (Recovery ratio of valuable metal)

The recovery ratio of the valuable metal (Co) was obtained as follows. That is, the recovery ratio was obtained as (Co weight in recovered alloy) ÷ (Co weight in recovered alloy + Co weight in slag) × 100 (mass%). The component analysis in the recovered alloy was performed by fluorescent X-ray.

### [Examples 2 to 4 and Comparative Examples 1 to 4]

Valuable metals were produced and evaluated in the same manner as in Example 1 except that the proportions of the 18650 type cylindrical battery, the used rectangular battery, and the defective product prepared in the waste battery pretreatment step were changed, and the slag composition obtained by the reductive melting treatment, the melting temperature, and the oxygen partial pressure were set to be the slag composition, the melting temperature, and the oxygen partial pressure shown in Table 1.

### [Evaluation results]

The results obtained for Examples and Comparative Examples are shown in the following Table 1.

As shown in Table 1, in Examples 1 to 4, the separation between the slag and the metal (alloy) was good. In addition, the cobalt (Co) recovery ratio was as good as 95% or more. In particular, in Example 4, the cobalt recovery ratio exceeded 98%, and valuable metals could be recovered at a higher recovery ratio by inexpensive operation.

On the other hand, in Comparative Examples 1 to 4, the cobalt recovery ratio was lower than that in Examples. In Comparative Examples 1 and 2, it was inferred that since the slag was not completely melted, the viscosity of the slag was increased. That is, it is considered that since the viscosity of the slag was high, a large number of metal particles were present in the recovered slag, and this led to deterioration of the separation between the slag and the metal, that is, deterioration of the cobalt recovery ratio.

More specifically, in Comparative Example 1, it is considered that since the oxygen partial pressure in the melt was less than 10⁻¹⁴, manganese (Mn) transferred from the slag to the metal, the Mn grade in the slag was less than 5.0 mass%, and the melting point of the slag increased. In Comparative Example 2, it is considered that since the Ca/Al ratio of the slag was less than 0.3, the melting point of the slag increased. In Comparative Example 3, it is considered that since the oxygen partial pressure in the melt was high and the amount of cobalt (Co) distributed to the slag was increased through oxidation, the cobalt recovery ratio was deteriorated. In Comparative Example 4, it is considered that since the Li/Al ratio of the slag was less than 0.25, the melting point of the slag increased.

In any of the test examples, the recovery ratios of copper (Cu) and nickel (Ni) exceeded 95%.

**[Table 1]**

| | Slag composition | | | Melting temperature (°C) | Cobalt recovery ratio (%) | Oxygen partial pressure (atm) |
|---|---|---|---|---|---|---|
| | Li/Al | Ca/Al | Mn amount (mass%) | | | |
| Example 1 | 0.25 | 0.33 | 5.0 | 1450 | 95.5 | 10^{-11.6} |
| Example 2 | 0.25 | 0.40 | 5.5 | 1450 | 96.5 | 10^{-12.5} |
| Example 3 | 0.43 | 0.33 | 5.0 | 1400 | 97.1 | 10^{-12.9} |
| Example 4 | 0.43 | 0.33 | 5.1 | 1400 | 98.9 | 10^{-13.4} |
| Comparative Example 1 | 0.25 | 0.33 | 1.0 | 1450 | 82.7 | 10^{-14.2} |
| Comparative Example 2 | 0.25 | 0.27 | 5.0 | 1400 | 83.2 | 10^{-12.5} |
| Comparative Example 3 | 0.25 | 0.33 | 9.6 | 1400 | 83.5 | 10^{-8.3} |
| Comparative Example 4 | 0.10 | 0.33 | 5.0 | 1400 | 84.2 | 10^{-11.6} |

## Claims

1. A method for producing a valuable metal, comprising:
a preparation step of preparing a raw material containing at least lithium (Li), manganese (Mn), aluminum (Al), and valuable metals;
a reductive melting step of subjecting the raw material to a reductive melting treatment to obtain a reduced product containing an alloy containing valuable metals and a slag; and
a slag separation step of separating the slag from the reduced product to recover the alloy, wherein
in any one or both of the preparation step and the reductive melting step, a flux containing calcium (Ca) is added to the raw material and/or a treated product,
a molar ratio (Li/Al ratio) of lithium (Li) to aluminum (Al) in the slag obtained by the reductive melting treatment is 0.25 or more, a molar ratio (Ca/Al ratio) of calcium (Ca) to aluminum (Al) in the slag is 0.30 or more, and an amount of manganese (Mn) in the slag is 5.0 mass% or more, and
in the reductive melting treatment, an oxygen partial pressure in a melt obtained by melting the raw material is controlled to 10⁻¹⁴ or more and 10⁻¹¹ or less.

2. The method for producing a valuable metal according to claim 1, wherein
in the reductive melting treatment, an oxygen partial pressure in a melt obtained by melting the raw material is controlled to 10⁻¹⁴ or more and 10⁻¹³ or less.

3. The method for producing a valuable metal according to claim 1 or 2, further comprising
an oxidative roasting step of oxidatively roasting the raw material to obtain an oxidatively roasted product, wherein
the oxidatively roasted product is subjected to the reductive melting treatment.

4. The method for producing a valuable metal according to any one of claims 1 to 3, wherein
a reducing agent is introduced in the reductive melting treatment.

5. The method for producing a valuable metal according to any one of claims 1 to 4, wherein
a heating temperature in the reductive melting treatment is 1,300°C or higher and 1,550°C or lower.

6. The method for producing a valuable metal according to any one of claims 1 to 5, wherein
a heating temperature in the reductive melting treatment is 1,350°C or higher and 1,450°C or lower.

7. The method for producing a valuable metal according to any one of claims 1 to 6, wherein
the raw material includes a waste lithium ion battery.
